# EUROPÄISCHE PATENTSCHRIFT

(11) **EP 0 522 321 B1**
(45) Veröffentlichungstag und Bekanntmachung des Hinweises auf die Patenterteilung: **28.04.1999**
(21) Anmeldenummer: 92110145.7
(22) Anmeldetag: 16.06.1992
(51) Int. Cl.: C09J 175/06, C09J 175/08, D06N 3/14, D06M 15/564, D06B 1/00, B32B 7/12, B32B 27/40, B29D 9/00

(54) **Schmelzkleber**
Melt adhesive
Adhésif fusible

(30) Priorität: 01.07.1991 DE 4121716
(43) Veröffentlichungstag der Anmeldung: 13.01.1993
(73) Patentinhaber: H.B. FULLER LICENSING & FINANCING, INC., Saint Paul, Minnesota 55110-5132 (US)
(72) Erfinder: Werenicz, Harald, W-2121 Rippenstedt (DE); Maitz, Franz, W-8206 Bruckmühl (DE); Nussbaumer, Walter, Dr., A-4813 Altmünster (AT); Stingl, Ludwig, W-8000 München 90 (DE); Schmitz, Franz Peter, Dr., W-8011 Vaterstetten (DE)
(74) Vertreter: Maiwald, Walter, Dr. Dipl.-Chem.

(56) Entgegenhaltungen:
- DE-A- 3 815 720
- DE-A- 3 827 224
- DE-A- 3 922 028
- DE-A- 4 023 801

## Beschreibung

Die Erfindung betrifft Schmelzkleber, enthaltend wenigstens ein Umsetzungsprodukt einer NCO-Gruppen enthaltenden Komponente und wenigstens einer im wesentlichen linearen Hydroxypolyesterkomponente. Außerdem betrifft die Erfindung ein Verfahren zur Herstellung eines Wasser nur dampfförmig durchlassenden Materials in Form eines insbesondere bahnartigen, flächig mit einer Polyurethanfolie verbundenen Fasermaterials, bei dem das Fasermaterial mit dem Polyurethanmaterial beschichtet und nachfolgend das Polyurethanmaterial zu einer wasserdampfdurchlässigen Folie ausgehärtet wird. Die Erfindung betrifft weiterhin ein Material, das Wasser nur dampfförmig durchläßt und die Form eines, insbesondere bahnartigen, flächig mit einer Polyurethanfolie verbundenen Fasermaterials hat.

Materialien, die Wasser zwar dampfförmig, nicht aber in flüssiger Form durchlassen, werden seit langem hergestellt und haben große Bedeutung für die Herstellung wetterfester Kleidung sowie von Abdeckplanen, in der Bauindustrie und in vielen anderen Anwendungsbereichen, bei denen Wasserdampfdurchlässigkeit erwünscht, Durchlässigkeit für flüssiges Wasser aber unerwünscht ist.

Solche Materialien können auf der Grundlage von Fasermaterialien erzeugt werden, seien dies Wirkmaterialien oder Wirrmaterialien wie beispielsweise Vliesstoffe. Solche Fasermaterialien sind per se nicht nur wasserdampfdurchlässig, sondern auch durchlässig für flüssiges Wasser. Die gewünschte Wasserfestigkeit wird im Stand der Technik bislang überwiegend dadurch erreicht, daß eine nur für Wasserdampf durchlässige Folie aus synthetischem Material mit dem Fasermaterial verbunden wird. Beispiele für solche bekannten Materialien sind GORETEX-Laminate.

So ist aus dem US-Patent 39 53 566 ein Textilstoff bekannt, auf den eine poröse wasserdampfdurchlässige Polytetrafluorethylenfolie mittels eines Klebstoffes auflaminiert ist.

Aus der DE-OS 38 36 434 ist es bekannt, eine wasserdampfdurchlässige Folienbahn auf Textilien thermisch mittels eines aufgesprühten Schmelzklebers aufzukaschieren. Stattdessen kann gemäß DE-OS 38 15 720 eine aus der Lösung oder Dispersion fertig vorgebildete, wasserdampfdurchlässige Polyurethanfolie von einem Umkehrpapier thermisch (durch Aufschweißen) auf Textilien aufkaschiert werden.

Die Verbindung von vorgefertigten Folien mit Fasermaterialien ist jedoch in vielerlei Hinsicht nachteilig. So erfordert die Verbindung von Folie und Fasermaterial mehrere aufwendige Verarbeitungsschritte. Die Verwendung eines Klebers zur Verbindung von Folie und Fasermaterial hat den Nachteil, daß dadurch das Produkt oft steifer wird; außerdem kann der verwendete Kleber die für die Wasserdampfdurchlässigkeit unerlässlichen Strukturen der Folie verkleben und damit blockieren. Die Aufschweißung einer Polyurethanfolie unmittelbar auf das Fasermaterial gemäß DE-OS 38 15 720 erfordert die aufwendige Vorbildung der Folie aus der Lösung oder Dispersion und ist daher technisch sehr schwierig zu bewerkstelligen.

Einen ersten Schritt zur Überwindung dieser Probleme zeigt die EP-A2-0 287 736, derzufolge eine wasserdampfdurchlässige und wasserabsorbierende Beschichtung aus einem speziellen, mit Acrylat derivatisierten Polyurethanoligomeren erzeugt wird. Dieses Oligomere wird zusammen mit einer vorgebildeten PTFE-Matrix-Folie auf das Fasermaterial aufgewalzt und dann in zwei Härtungsschritten (Strahlungshärtung und nachfolgende Feuchtigkeitshärtung) ausgehärtet und mit dem Fasermaterial verbunden.

Dieses Verfahren ist jedoch immer noch sehr aufwendig und löst die Probleme des Standes der Technik nicht zureichend. Nach wie vor muß eine vorgebildete PTFE-Folie eingesetzt werden; die gleichzeitige Aufbringung von flüssigem Polyurethanmaterial und vorgebildeter Teflon-Matrix-Folie sowie die beiden folgenden Härtungsschritte gestalten das Verfahren aufwendig.

In der DE-OS 39 22 028 wird der Vorschlag gemacht, ein gattungsgemäßes Material dadurch herzustellen, daß auf einem bahnartigen Fasermaterial eine Schicht aus Adhäsivmaterial aufgetragen und klebend mit der Oberfläche des Fasermaterials verbunden wird. Das Adhäsivmaterial soll wasserdampfdurchlässig, gleichzeitig aber wasserdicht sein und beispielsweise aus einem Schmelzkleber gebildet werden. Die Anmeldung enthält keine Angabe dazu, um welche Art von Schmelzkleber es sich dabei handeln soll.

Im Stand der Technik ist eine unübersehbare Zahl verschiedenartigster Schmelzkleber bekannt. Üblicherweise enthalten diese ein Polymermaterial, das im wesentlichen die Kohäsionseigenschaften des Klebers bestimmt, im Gemisch mit klebrig machenden Harzen und dgl., die im wesentlichen für die Adhäsionseigenschaften ausschlaggebend sind. Hinzu kommen üblicherweise plastifizierende Komponenten. Alle drei genannten Hauptbestandteile können unterschiedlichster Art sein.

Nach Kenntnis der Anmelderin kann aber aus keinem im Stand der Technik beschriebenen, geschweige denn im Handel erhältlichen Schmelzkleber eine membranartige Folie auf einer Faserschicht ausgebildet werden, die für Wasserdampf durchlässig ist und den Anwendungsbedingungen des fertigen Materials gewachsen ist.

Es ist daher eine wesentliche Aufgabe der Erfindung, Schmelzklebstoffe anzugeben, die sich zur Erzeugung einer wasserdampfdurchlässigen, membranartigen Folie in situ auf einem Fasermaterial eignen, so daß die Folienkomponente des Materials nicht fertig vorgebildet werden muß, wobei die Eigenschaften des fertigen Materials hinsichtlich Wasserdampfdurchlässigkeit, Wasserdichte, Lebensdauer, Steifigkeit usw. den im Stand der Technik bekannten Materialien in etwa gleichkommen.

Es ist eine weitere Aufgabe der Erfindung, ein Verfahren zur unaufwendigeren und störungsfreieren Herstellung gattungsgemäßer, wasserdampfdurchlässiger Materialien sowie entsprechend erzeugbare Materialien anzugeben.

Zur Lösung dieser Aufgabe dienen die Merkmale der unabhängigen Ansprüche; vorteilhafte Ausgestaltungen sind in den Unteransprüchen definiert. Die erfindungsgemäßen Schmelzklebstoffe sind im Grundsatz Polyurethanschmelzkleber.

In der DE-OS 40 23 801 werden Heißschmelzkleber beschrieben, die zur Verklebung verschiedener Teile in der Auto- und Konstruktionsindustrie, insbesondere zum Einkleben von Fenstergläsern von Automobilen in kalten Regionen geeignet sind.

Der bekannte Schmelzkleber enthält eine Kombination zweier Urethanprepolymere A und B. Diese Komponenten A und B werden entweder in dem gleichen Reaktionssystem oder alternativ gesondert hergestellt.

In einer ersten Ausführungsform wird ein Polyol mit einem Molgewicht von 1000 bis 8000 mit einer Diisocyanatverbindung umgesetzt, wobei ein Urethanprepolymer mit terminalen Isocyanatgruppen gebildet wird. Dieses NCO-terminierte Polymer reagiert in einer zweiten Umsetzung mit einem thermoplastischen gesättigten Polyesterpolyol mit einem Molgewicht von 1000 bis 6000 zu einem Blockpolymerpolyol, das die Komponente A bildet. Diese Komponente A enthält einen Polyolblock, der über Urethanbindungen mit zwei Polyesterblöcken verbunden ist. In einem dritten Schritt wird das erhaltene Blockpolymerpolyol mit einem Polyol mit einem Molgewicht von nicht mehr als 8000 vermischt und das Polyol unter Zugabe einer Diisocyanatverbindung zur Komponente B umgesetzt.

In einer zweiten Ausführungsform werden die Komponenten A (wie oben beschrieben) und B (durch Umsetzung des Polyols mit einem Molgewicht von nicht mehr als 8000 mit einer Diisocyanatverbindung) gesondert hergestellt und erst anschließend miteinander vermischt.

In einer dritten Ausführungsform wird das Blockpolymer in umgekehrter Reaktionsfolge gebildet, indem erst der thermoplastische Polyester mit einer Diisocyanatverbindung umgesetzt wird. Anschließend erfolgt die Reaktion mit dem Polyol, das dann wiederum mit Diisocyanatverbindung abgesättigt wird.

Die in dieser Vorveröffentlichung beschriebene Komponente A enthält ein Polyol, zum Beispiel einen Polyether oder einen Polyester, der über NCO-Brücken mit Polyestereinheiten verbunden ist. Die dabei eingesetzten Polyesterkomponenten enthalten Dicarbonsäuren und Diole bzw. Triole. Hinsichtlich zusätzlich eingebauter makromolekularer Polyethyleneinheiten findet sich kein Hinweis. Es werden keine segmentierenden Polyethereinheiten offenbart, die eine Molmasse von mindestens 1000 aufweisen, sondern nur erheblich kleinere Polyethyleneinheiten, wie (als größte) Tripropylenglykoleinheiten mit einem Molekulargewicht von 222.

Die DE-OS 38 27 224 offenbart ähnliche Schmelzklebstoffe zum Verkleben von Metallen, Glas, Holz, Keramik, Leder, Kunststoffen und dergleichen.

Diese bekannten Schmelzklebstoffe bestehen ganz oder teilweise aus Umsetzungsprodukten von NCO-Gruppen enthaltenden Komponenten, nämlich polyfunktionellen Isocyanaten (Polyisocyanaten) und teilkristallinen Hydroxypolyestern mit Gehalten von ausschließlich aliphatischen Dicarbonsäuren, entsprechend der allgemeinen Formel 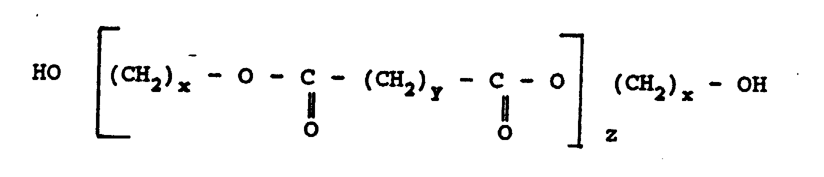 worin x + y = 12 bis 26 und wahlweise Y = 8 bis 12 oder x = 6 bis 18 ist und z 3 bis 50 beträgt. Das Verhältnis der Umsetzung von OH:NCO wird 1:1,2 bis 1:3,0, vorzugsweise 1:1,5 bis 1:2,5 gewählt.

Diese bekannten Schmelzklebstoffe sollen eine besonders kurze Abbindezeit entscheidend dadurch erreichen, daß die teilkristallinen Polyester Decandisäure, Dodecandisäure oder Tetradecandisäure enthalten, wobei Dodecandisäure sehr bevorzugt ist.

Die Diolkomponente der Polyester besteht vorzugsweise aus aliphatischen C₆- bis C₁₂-Diolen, bei langkettigeren Dicarbonsäuren auch aus C₂- oder C₄-Diolen. Neben diesen Diolen können auch Etherdiole enthalten sein, beispielsweise auf der Basis Ethylenglykol oder Butandiol-1,4, was aber nicht bevorzugt wird. In keinem Fall soll der Anteil solcher Etherdiole größer als 50 Mol-% der Diolkomponente sein. Gemäß den Ausführungsbeispielen handelt es sich hierbei nicht um segmentierende Kettenbestandteile des Polyesters, sondern um Bestandteile des Monomerengemisches zur Regulierung des Abbindeverhaltens.

Die DE-OS 38 27 224 enthält keinerlei Angabe zu den Eigenschaften eines folienartig ausgeformten und ausgehärteten Schmelzklebers gemäß ihrer Lehre, insbesondere nichts zu der Porosität, geschweige denn Wasserdampfdurchlässigkeit einer solchen Folie. Dementsprechend enthält die DE-OS 38 27 224 auch keinen Hinweis auf den Einsatz der in ihr beschriebenen Schmelzkleber für die Erzeugung wasserdampfdurchlässiger, aber wasserfester Materialien.

Die Schmelzkleber gemäß diesem Stand der Technik sind als solche für die Zwecke der vorliegenden Erfindung nicht geeignet.

Ein wesentlicher Vorteil der Erfindung liegt darin, daß der erfindungsgemäße Schmelzkleber unmittelbar (oder auch durch ein Transferverfahren) auf ein Fasermaterial aufgetragen und dort in situ in nur einem Härtungsschritt (nämlich durch Feuchtigkeitseinwirkung) zu einer membranartigen Folie verarbeitet werden kann, die wasserdampfdurchlässig ist, gleichzeitig aber eine ganz erhebliche Wasserfestigkeit aufweist. Hierdurch wird die Herstellung erfindungsgemäßer Materialien außerordentlich vereinfacht. Beispielsweise kann der erfindungsgemäße Schmelzkleber mittels einer Breitschlitzdüse schmelzflüssig auf eine Textil- oder Vliesstoffbahn bzw. ein Transfermedium (und von diesem, vorzugsweise unmittelbar folgend, auf das Fasermaterial) aufgetragen werden; danach wird die gewünschte Membranfolie durch einfache Feuchtigkeitseinwirkung fertiggestellt. Durch geeignete Wahl der Verarbeitungsbedingungen kann das Eindringen des Schmelzklebers in das Fasermaterial sowie das Flächengewicht der gebildeten Folie (üblicherweise etwa 20 g/m²) gesteuert werden. Diese sehr dünne Membranfolie beeinträchtigt die Eigenschaften des Fasermaterials nicht, obwohl sie äußerst fest mit ihm verbunden ist. Hierzu trägt die geringe Dicke der Folie wie auch deren geringe Eigensteifigkeit bei. Die Folie hat dennoch Wasserfestigkeiten gemäß DIN 53886 bis zu Prüfdrucken von mehr als 0,7 bar, d. i. 7 m statischer Wassersäule.

Erfindungsgemäße Schmelzkleber, bei denen die NCO-Gruppen enthaltende(n) Komponente(n) mit wenigstens zwei verschiedenen, OH-Gruppen enthaltenden Komponenten umgesetzt werden, nämlich einerseits mit einem Hydroxypolyester und andererseits mit einem Hydroxypolyether, haben nach Kenntnis der Anmelderin im Stand der Technik kein Vorbild. Bei diesen Umsetzungsprodukten sind zwei NCO-Funktionen jeweils entweder durch eine Polyesterkette oder eine Polyetherkette verbunden, wobei die Aufeinanderfolge der polymeren Komponenten in der Molekülkette des Umsetzungsproduktes statistisch sein kann. In einer Abwandlung können die Polyesterketten durch eingefügte Polyethergruppen segmentiert sein.

Bei den anderen erfindungsgemäßen Schmelzklebern sind jeweils zwei NCO-Gruppen durch Polyestereinheiten verbunden, die ihrerseits durch eingeschobene Polyethergruppen segmentiert sind. Im Grenzfall können die Polyestergruppen vollständig durch Polyethergruppen ersetzt sein, d. h. der Schmelzkleber enthält dann ein Umsetzungsprodukt einer NCO-Gruppen enthaltenden Komponente mit einer im wesentlichen linearen Hydroxypolyetherkomponente.

Die wesentliche Abwandlung dieses erfindungsgemäßen Schmelzklebers gegenüber dem Stand der Technik gemäß DE-OS 38 27 224 liegt in der Segmentierung der Diolkomponente durch Einbau von Polyethergruppen. Besonders bevorzugt wird die Polyesterkomponente durch Einkondensieren von Polyethylenglykol mit Molmassen im Bereich einiger Tausend (in üblicher Weise durch Schmelzkondensation im Vakuum) in die Diolmoleküle modifiziert.

Die besonders bevorzugten Polyesterkomponenten sind abgeleitet von Copolyestern, die wie folgt, charakterisiert sind: sie sind aufgebaut aus aliphatischen sowie aromatischen Dicarbonsäuren und Diolen einer Kettenlänge von C₂ bis C₂₀. Die OH-Zahl der Polyester liegt zwischen 10 und 50, vorzugsweise 20 bis 40; ihre Glasübergangstemperatur zwischen 0 und -50°C. Diese Polyester werden erfindungsgemäß dadurch modifiziert, daß ein Polyether, vorzugsweise Polyethylenglycol mit Mol.gew. > 1000, vorzugsweise > 3000 in einer Menge von > 10, vorzugsweise > 20 Massen-% einkondensiert wird.

Vorzugsweise wird ein mit 30 Massen-% PEG 3000 modifizerter Polyester auf der Basis des von der Hüls AG erhältlichen Produktes Dynacoll® 7210 verwendet.

Der so modifizierte -segmentierte- Copolyester läßt sich dann mit Polyisocyanaten, vorzugsweise Diisocyanaten wie z.B. MDI zum reaktiven Schmelzkleber umsetzen. Dieses Isocyanat ist beispielsweise unter dem Namen "Desmodur 44 M"® von Bayer AG erhältlich. Die Umsetzung erfolgt in einem Verhältnis OH:NCO = 1,0:1,6 bis 1,0:2,6, vorzugsweise 1,0:1,8 bis 1,0:2,4.

Zur Einstellung der mechanischen Eigenschaften des ausgehärteten Produkts, insbesondere der Zugfestigkeit sowie der Undurchlässigkeit gegen flüssiges Wasser, können bis zu 30 Teilen (bezogen auf 100 Teile des erfindungsgemäßen, segmentierten Copolyesters) eines nicht segmentierten Copolyesters mit höherer Glasübergangstemperatur, d.i. 0 bis 50°C, vorzugsweise T_{g} +20 bis +40°C bei der Umsetzung mit Isocyanat mit einbezogen werden. Ein bevorzugtes Beispiel hierfür ist das von der Hüls AG erhältliche Produkt Dynacoll® 7140.

Erfindungsgemäße Schmelzkleber werden nach üblichen Verfahren herstellt, wobei die Umsetzung der erfindungsgemäßen Hydroxypolyesterkomponente und eventuell zusätzlicher handelsüblicher Hydroxypolyesterkomponenten mit dem Polyisocyanat gleichzeitig erfolgen kann. Es kann demgegenüber vorteilhaft sein, die jeweiligen Hydroxypolyester separat mit dem Polyisocyanat umzusetzen und den Schmelzkleber dann aus den so entstandenen PU-Komponenten zu mischen.

Obwohl erfindungsgemäß die oben beschriebenen Hydroxycopolyester besonders bevorzugt werden, kann der erfindungsgemäße Schmelzkleber auch andere Hydroxypolyester, Hydroxypolyetherester bzw. Hydroxypolyether enthalten, z.B. Polycaprolacton, Polycarbonate, Polytetrahydrofuran.

Statt Diphenylmethan-4,4'-diisocyanat (MDI) lassen sich vorteilhaft aliphatische Polyisocyanate wie z.B. Isophorondidisocyanat, Tetramethylxylyldiisocyanate, hydriertes MDI und Hexandiisocyanat einsetzen.

Die erfindungsgemäßen Schmelzkleber enthalten vorzugsweise die erfindungsgemäße derivatisierte Hydroxypolyesterkomponente (bzw. Hydroxypolyetherester- bzw. Hydroxypolyetherkomponente) sowie eine handelsübliche, nicht derivatisierte Hydroxypolyesterkomponente im Verhältnis von etwa 2:1. Übliche Zusätze von Antioxydantien, Füllstoffen (beispielsweise flammenhemmenden Zuschlägen), Pigmenten usw. können eingearbeitet werden. Hinsichtlich der mit dem erfindungsgemäßen Schmelzkleber kombinierbaren Fasermaterialien bestehen keine Beschränkungen, genausowenig hinsichtlich der Anzahl miteinander verbindbarer Lagen bzw. Schichten von Fasermaterial und aus Schmelzkleber gebildeter Folie.

Die Auftragung des schmelzflüssigen Schmelzklebers auf das Fasermaterial bzw. das Transfermedium erfolgt vorzugsweise mittels einer Breitschlitzdüse, beispielsweise dem Breitschlitzauftragsventil MA 25 der Firma Macon Klebetechnik, Erkrath. Dies gestattet eine absolut gleichmäßige Beschichtung über die gesamte Auftragsbreite bei konstantem Auftragsgewicht, auch bei unterschiedlicher Viskosität des Schmelzklebers, und gleichzeitig minimale Auftragsgewichte. Beim Auftrag ist keine Gegendruckwalze erforderlich, was die Herstellung der erfindungsgemäßen Materialien wesentlich vereinfacht. Gleichzeitig lassen sich durch unterschiedliche Mengendosierung über die Auftragsbreite auch Profilaufträge erzielen.

Im folgenden wird die Erfindung anhand von Ausführungsbeispielen näher beschrieben. Es versteht sich, daß diese Ausführungsbeispiele nur eine erfindungsgemäße Arbeitsweise veranschaulichen, nicht aber beschränkend zu verstehen sind.

### Beispiel 1

Die Hydroxycopolyesterkomponente eines erfindungsgemäßen Schmelzklebers wurde hergestellt, indem ein Gemisch von 70 Massen-% Ethylenglykol und 30 Massen-% Polyethylenglykol mit Molmasse 3.000 einer Schmelzkondensation im Vakuum mit Adipinsäure, Terephthalsäure und ortho-Phthalsäure (im Gewichtsverhältnis von etwa 2:1:1) unterzogen wurde.

### Beispiel 2

Zur Herstellung eines erfindungsgemäßen Schmelzklebers wurden 280 g (63,3 Gew.-%) des modifizierten Copolyesters gemäß Beispiel 1 mit 120 g (27,1 Gew.-%) handelsüblichem amorphen Copolyester mit T_{g} = +40°C (Dynacoll® 7140) auf 120°C erhitzt und bei dieser Temperatur 30 Minuten lang evakuiert. Das Vakuum lag unterhalb 1 Torr. Nachfolgend wurden 42 g (9,5 Gew.-%) Diphenylmethan-4,4'-di-isocyanat (Desmodur® 44 MS) zugesetzt. Weiterhin wurden 0,2 g Irganox® 1010 (Antioxydans) zugegeben.

Das Gemisch wurde 60 Minuten lang bei 120 bis 130°C erhitzt und homogenisiert. Danach wurde der erhaltene Schmelzkleber abgekühlt.

### Beispiel 3

Der Schmelzkleber gemäß Beispiel 2 wurde mit einem Breitschlitz-Auftragventil MA 25 der Firma Macon Klebetechnik mit einem Flächengewicht von 38 g/m² auf Siliconpapier und sogleich von diesem auf eine Vliesfaserbahn aufgetragen und nachfolgend unter Feuchtigkeitseinwirkung ausgehärtet.

### Beispiel 4

Mit einer Probe des Materials gemäß Beispiel 3 wurde die Wasserdampfdurchlässigkeit gemäß DIN 53333 bestimmt, wobei in Abweichung von der Norm mit stehender Luft gearbeitet wurde.

Die Wasserdampfdurchlässigkeit wurde zu 99 g/m² d bestimmt.

### Beispiel 5

Mit einer weiteren Probe des Materials gemäß Beispiel 3 wurde die Wasserdichtheit im Wasserdruckversuch gemäß DIN 53886 bestimmt. Hierfür wurde ein Nahtprüfgerät der Firma PFAFF verwendet.

Das erfindungsgemäße Material war bis 0,7 bar (7 m statische Wassersäule) normgemäß wasserdicht.

Somit zeigt sich, daß die Erfindung eine besonders einfache und unaufwendige Herstellung wasserdampfdurchlässiger, sonst aber wasserfester Materialien ermöglicht, die mit einem einfachen Auftragschritt und einem ebenso einfachen Härtungsschritt auskommt und Materialien mit hervorragenden Durchlässigkeits- und Wasserdichtheitseigenschaften ergibt.

## Patentansprüche

1. Schmelzkleber, enthaltend wenigstens ein Umsetzungsprodukt einer NCO-Gruppen enthaltenden Komponente und wenigstens einer im wesentlichen linearen Hydroxypolyesterkomponente, sowie ggf. einen Gehalt an Polyethylenglykol,
dadurch gekennzeichnet, daß die Hydroxypolyesterkomponente eine segmentierende Hydroxypolyetherkomponente enthält, die eine mittlere Molmasse von größer 1000 aufweist.

2. Schmelzkleber nach Anspruch 1,
dadurch gekennzeichnet, daß der Hydroxypolyethergehalt bei 10 Gew.-% oder mehr, vorzugsweise bei 20 bis 95 Gew.-%, und insbesondere bei 30 Gew.-%, bezogen auf den gesamten Diolanteil der Hydroxypolyesterkomponente liegt.

3. Schmelzkleber nach Anspruch 1 oder 2,
dadurch gekennzeichnet, daß die segmentierenden Hydroxypolyethergruppen eine mittlere Molmasse von ungefähr 3.000 haben.

4. Schmelzkleber nach Anspruch 1,
dadurch gekennzeichnet, daß der Schmelzkleber ein Umsetzungsprodukt einer oder mehrerer, NCO-Gruppen enthaltenden Komponente bzw. Komponenten mit wenigstens zwei verschiedenen, OH-Gruppen enthaltenden Komponenten umfaßt, von denen eine ein Hydroxypolyester und die andere ein Hydroxypolyether ist, wobei die Hydroxypolyesterkomponente eine segmentierende Hydroxypolyetherkomponente enthält, die eine mittlere Molmasse von größer 1000 aufweist.

5. Schmelzkleber nach Anspruch 4,
dadurch gekennzeichnet, daß die segmentierenden Polyethereinheiten jeweils eine mittlere Molmasse von ungefähr 3000 haben.

6. Schmelzkleber nach einem der Ansprüche 4 und 5,
dadurch gekennzeichnet, daß die andere Hydroxypolyetherkomponente eine mittlere Molmasse zwischen 100 und 10.000, vorzugsweise zwischen 2.000 und 6.000, aufweist.

7. Schmelzkleber nach einem der Ansprüche 1 bis 6,
dadurch gekennzeichnet, daß die Polyetherkomponente bzw. Polyetherkomponenten von Polyalkylenglykol, insbesondere Polyethylenglykol, gebildet wird bzw. werden.

8. Schmelzkleber nach einem der Ansprüche 1 bis 7,
dadurch gekennzeichnet, daß die Polyesterkomponente einen Gehalt einer linearen aliphatischen Dicarbonsäure, vorzugsweise einer C₂ bis C₁₄ - Dicarbonsäure und insbesondere von Adipinsäure aufweist.

9. Schmelzkleber nach einem der Ansprüche 1 bis 8,
dadurch gekennzeichnet, daß die Polyesterkomponente einen Copolyester umfaßt, der aus aliphatischen und aromatischen Dicarbonsäuren und Diolen einer Kettenlänge von C₂ bis C₂₀ aufgebaut ist und vorzugsweise eine OH-Zahl zwischen 10 und 50, insbesondere zwischen 20 und 40 sowie eine Glasübergangstemperatur zwischen 0 und -50°C aufweist.

10. Schmelzkleber nach einem der Ansprüche 1 bis 9,
dadurch gekennzeichnet, daß die Polyesterkomponente einen Gehalt einer aromatischen Dicarbonsäure, vorzugsweise von Terephthalsäure und/oder Phthalsäure oder Isophthalsäure aufweist.

11. Schmelzkleber nach Anspruch 10,
dadurch gekennzeichnet, daß die Polyesterkomponente etwa gleiche Gewichtsanteile von aliphatischer und aromatischer Dicarbonsäure enthält.

12. Schmelzkleber nach Anspruch 11,
dadurch gekennzeichnet, daß der aromatische Dicarbonsäureanteil der Polyesterkomponente zu etwa gleichen Gewichtsteilen aus Terephthalsäure und Phthalsäure besteht.

13. Schmelzkleber nach einem der Ansprüche 1 bis 12,
dadurch gekennzeichnet, daß der Schmelzkleber zusätzlich eine weitere, insbesondere amorphe, Hydroxypolyesterkomponente enthält, die in an sich bekannter Weise aus Isophthalsäure und wenigstens einem niederaliphatischen Diol oder Polyol, insbesondere Ethylenglykol, Hexandiol und/oder Neopentylglykol, gebildet ist.

14. Schmelzkleber nach einem der Ansprüche 1 bis 13,
dadurch gekennzeichnet, daß die NCO-Gruppen enthaltende Komponente eine Polyisocyanatkomponente, vorzugsweise ein Diisocyanat und insbesondere wenigstens überwiegend Diphenylmethan-4,4'-diisocyanat oder aber ein aliphatisches Diisocyanat, insbesondere Isophorondiisocyanat, Tetramethylxylyldiisocyanat, hydriertes Diphenylmethan-4,4'-diisocyanat und/oder Hexandiisocyanat ist.

15. Schmelzkleber nach wenigstens einem der vorstehenden Ansprüche, enthaltend, bezogen auf das Gesamtgewicht,
a) zwischen 50 und 70 Gew.-% der Hydroxypolyesterkomponente, die etwa 30 Gew.-%, bezogen auf gesamtes Diol, eines segmentierenden Hydroxypolyethers mit einer mittleren Molmasse von ungefähr 3.000 aufweist,
b) einen hydroxypolyetherfreien linearen Hydroxypolyester und
c) ungefähr 10 Gew.-% Diisocyanat.

16. Schmelzkleber nach Anspruch 15, enthaltend, bezogen auf das Gesamtgewicht,
a) zwischen 60 und 65 Gew.-% eines polyethylenglykolhaltigen Polyesters,
b) zwischen 25 und 30 Gew.-% eines polyethylenglykolfreien Polyesters,
c) zwischen 5 und 15 Gew.-% Diphenylmethan-4,4'-diisocyanat, sowie
d) ggf. Antioxydantien und andere übliche Zusätze.

17. Schmelzkleber nach einem der vorstehenden Ansprüche, zusätzlich enthaltend andere Hydroxypolyester, Hydroxypolyetherester und/oder Hydroxypolyether, wie zum Beispiel Polycaprolacton, Polycarbonate, Polytetrahydrofuran.

18. Schmelzkleber nach einem der vorstehenden Ansprüche,
dadurch gekennzeichnet, daß der Schmelzkleber ohne Strahlungsbehandlung durch Feuchtigkeitseinwirkung aushärtbar ist.

19. Verfahren zur Herstellung eines Wasser nur dampfförmig durchlassenden Materials in Form eines, insbesondere bahnartigen, flächig mit einer Polyurethanfolie versehenen Fasermaterials, bei dem das Fasermaterial mit dem Polyurethanmaterial beschichtet und nachfolgend das Polyurethanmaterial zu einer wasserdampfdurchlässigen Folie ausgehärtet wird,
dadurch gekennzeichnet, daß die Folie aus einem durch Feuchtigkeitseinwirkung härtenden Schmelzkleber gemäß einem der Ansprüche 1 bis 18 gebildet wird, der schichtartig unmittelbar oder durch einen Transfervorgang auf das Fasermaterial aufgetragen wird.

20. Verfahren nach Anspruch 19, bei dem der Schmelzkleber ohne Strahlungsbehandlung durch Feuchtigkeitseinwirkung ausgehärtet wird.

21. Verfahren nach einem der Ansprüche 19 und 20,
dadurch gekennzeichnet, daß das Polyurethanmaterial durch ein Transferverfahren auf das Fasermaterial aufgetragen wird.

22. Wasser nur dampfförmig durchlassendes Material in Form eines, insbesondere bahnartigen, flächig mit einer Polyurethanfolie verbundenen Fasermaterials, insbesondere zur Herstellung von wetterfester Kleidung und dergleichen, erzeugbar durch das Verfahren wenigstens einer der Ansprüche 19 bis 21.

23. Material nach Anspruch 22,
dadurch gekennzeichnet, daß die Polyurethanfolie bis zu einem Prüfdruck von wenigstens 0,7 bar (7 m Wassersäule) wasserdichtgemäß DIN 53886 ist.

24. Material nach Anspruch 22 oder 23,
dadurch gekennzeichnet, daß das Fasermaterial gewirkt oder vliesartig ist.

25. Material nach einem der Ansprüche 22 bis 24,
dadurch gekennzeichnet, daß das Material zweilagig aufgebaut ist, wobei die eine Lage aus Fasermaterial und die andere aus der Polyurethanfolie besteht.

26. Material nach einem der Ansprüche 22 bis 25,
dadurch gekennzeichnet, daß das Material drei- oder mehrlagig aufgebaut ist, wobei wenigstens eine Polyurethanfolienlage beidseitig von Fasermateriallagen bedeckt ist.

27. Folie, erzeugbar aus einem Schmelzkleber gemäß einem der Ansprüche 1 bis 18.

## Claims

1. Hot melt adhesive, comprising at least one reaction product of an NCO-group containing component and at least one essentially linear hydroxypolyester component, as well as, in case, a content of polyethylene glycol,
**characterized in** that the hydroxypolyester component contains a segmenting hydroxypolyether component having an average molecular mass greater than 1.000.

2. Hot melt adhesive according to claim 1,
**characterized in** that the content of hydroxypolyether is 10 wt.-% or more, preferably 20 to 95 wt.-%, and especially preferred 30 wt.-%, based on the total diol portion of the hydroxypolyester component.

3. Hot melt adhesive according to claim 1 or 2,
**characterized in** that the segmenting hydroxypolyether groups have an average molecular mass of about 3.000.

4. Hot melt adhesive according to claim 1,
**characterized in** that the hot melt adhesive comprises a reaction product of one or several NCO-group containing component or components, respectively, with at least two different, OH-group containing components, one of which is a hydroxypolyester and the other one a hydroxypolyether, wherein the hydroxypolyester component contains a segmenting hydroxypolyether component having an average molecular mass greater than 1.000.

5. Hot melt adhesive according to claim 4,
**characterized in** that the segmenting polyether units each have an average molecular mass of about 3.000.

6. Hot melt adhesive according to any one of claims 4 and 5,
**characterized in** that the other hydroxypolyether component has an average molecular mass between 100 and 10.000, preferably between 2.000 and 6.000.

7. Hot melt adhesive according to any one of claims 1 to 6,
**characterized in** that the polyether component or polyether components, respectively, is or are formed by polyalkylene glycol, especially polyethylene glycol.

8. Hot melt adhesive according to any one of claims 1 to 7,
**characterized in** that the polyester component comprises a content of a linear aliphatic dicarboxylic acid, preferably a C₂ to C₁₄ dicarboxylic acid and especially preferred adipic acid.

9. Hot melt adhesive according to any one of claims 1 to 8,
**characterized in** that the polyester component comprises a copolyester, which is built of aliphatic and aromatic dicarboxylic acids and diols having a chain length of C₂ to C₂₀ and preferably an OH number between 10 and 50, especially preferred between 20 and 40, and a glass transition temperature between 0 and -50° C.

10. Hot melt adhesive according to any one of claims 1 to 9,
**characterized in** that the polyester component comprises a content of an aromatic dicarboxylic acid, preferably of terephthalic acid and/or phthalic acid or isophthalic acid.

11. Hot melt adhesive according to claim 10,
**characterized in** that the polyester component contains approximately equal parts by weight, of aliphatic and aromatic dicarboxylic acid.

12. Hot melt adhesive according to claim 11,
**characterized in** that the aromatic dicarboxylic acid portion of the polyester component consists of approximately equal parts by weight, of terephthalic acid and phthalic acid.

13. Hot melt adhesive according to any one of claims 1 to 12,
**characterized in** that the hot melt adhesive contains an additional, especially amorphous, hydroxypolyester component, which is built in a manner known per se, of isophthalic acid and at least one lower aliphatic diol or polyol, especially ethylene glycol, hexane diol and/or neopentyl glycol.

14. Hot melt adhesive according to any one of claims 1 to 13,
**characterized in** that the NCO-group containing component is a polyisocyanate component, preferably a diisocyanate and in particular is, at least predominantly, diphenylmethane-4,4'-diisocyanate or alternatively an aliphatic diisocyanate, in particular isophorone diisocyanate, tetramethylxylyl diisocyanate, hydrated diphenylmethane-4,4'-diisocyanate and/or hexane diisocyanate.

15. Hot melt adhesive according to at least one of the preceeding claims, containing, based on total weight,
a) between 50 and 70 wt.-% of the hydroxypolyester component, which comprises about 30 wt.-%, based on total diol, of a segmenting hydroxypolyether with an average molecular mass of about 3.000,
b) a hydroxypolyether-free linear hydroxypolyester and
c) approximately 10 wt.-% of diisocyanate.

16. Hot melt adhesive according to claim 15, containing, based on total weight,
a) between 60 and 65 wt.-% of a polyethylene glycol containing polyester,
b) between 25 and 30 wt.-% of a polyethylene glycol-free polyester,
c) between 5 and 15 wt.-% of diphenylmethane-4,4'-diisocyanate, as well as, in case,
d) antioxidants and other common additives.

17. Hot melt adhesive according to any one of the preceeding claims, additionally containing other hydroxypolyesters, hydroxypolyetheresters and/or hydroxypolyethers, as for example polycaprolactone, polycarbonate, polytetrahydrofurane.

18. Hot melt adhesive according to any one of the preceeding claims,
**characterized in** that the hot melt adhesive is moisture curable without irradiation treatment.

19. Process for the production of a material which is permeable to water only in the form of vapour, especially in the form of a web-like, fibrous material with a polyurethane film on at least one surface, wherein the fibrous material is coated with a polyurethane material and the polyurethane material is subsequently cured to form a vapour-permeable film,
**characterized in** that the film is formed from a moisture-cureable hot melt adhesive according to any one of claims 1 to 18, which is layered directly or by a transfer process onto the fibrous material.

20. Process according to claim 19, in which the hot melt adhesive is moisture cured without irradiation treatment.

21. Process according to any one of claims 19 and 20,
**characterized in** that the polyurethane material is applied onto the fibrous material by a transfer process.

22. A material permeable to water only in the form of vapour, especially in the form of a web-like fibrous material with a polyurethane film on at least one surface, especially for the production of weatherproof clothing and the like, produceable by the process of at least one of claims 19 to 21.

23. A material according to claim 22,
**characterized in** that the polyurethane film is watertight up to a test pressure of at least 0,7 bar (7 m head of water), in accordance with DIN 53886.

24. A material according to claim 22 or 23,
**characterized in** that the fibrous material is knitted or non-woven.

25. A material according to any one of claims 22 to 24,
**characterized in** that the material is built up of two layers, wherein one layer consists of fibrous material and the other one of the polyurethane film.

26. A material according to any one of claims 22 to 25,
**characterized in** that the material is built up of three or more layers, wherein at least one polyurethane film layer is covered by fibrous material layers on both surfaces.

27. A film, produceable from a hot-melt-type adhesive according to any one of claims 1 to 18.

## Revendications

1. Colle fusible (« Schmelzkleber ») contenant au moins un produit de transformation d'un composant contenant un groupe NCO et au moins un composant du type hydroxypolyester essentiellement linéaire ainsi que éventuellement une teneur en polyéthylèneglycol, **caractérisée en ce que** le composant d'hydroxypolyester contient un composant d'hydroxypolyéther segmentant/séquençant («segmentierende Hydroxypolyether») qui présente une masse moléculaire moyenne de l'ordre de 1000.

2. Colle fusible selon la revendication 1, **caractérisée en ce que** la teneur d'hydroxypolyéther par rapport à la fraction totale de diol du composant hydroxypolyester se situe à 10 % en poids ou plus de préférence de 20 à 95 % en poids et plus particulièrement à 30 % en poids.

3. Colle fusible selon la revendication 1 ou 2, **caractérisée en ce que** les groupes hydroxypolyéther segmentant/séquençant, présentent une masse moléculaire moyenne d'environ 3000.

4. Colle fusible selon la revendication 1, **caractérisée en ce que** la Colle fusible est un produit de transformation d'un ou plusieurs composés contenant des groupes NCO, respectivement des composés comprenant au moins deux composants différents contenant des groupes OH parmi lesquels l'un des composés est un hydroxypolyester et l'autre est un hydroxypolyéther, où le composant de type hydroxypolyester contient un composant du type hydroxypolyéther segmentant/séquençant qui présente une masse moléculaire moyenne de l'ordre de 1000.

5. Colle fusible selon la revendication 4, **caractérisée en ce que** les unités segmentantes/séquençantes de polyéther présentent chaque fois (« jeweils ») une masse moléculaire moyenne d'environ 3000.

6. Colle fusible selon l'une des revendications 4 et 5, **caractérisée en ce que** l'autre composant d'hydroxypolyéther présente une masse moléculaire moyenne comprise entre 100 et 10.000, de préférence comprise entre 2.000 et 6.000.

7. Colle fusible selon une des revendications 1 à 6, **caractérisée en ce que** le composant de polyéther respectivement les composants de polyéther est/sont formé(s) à partir de polyalkylèneglycol en particulier le polyéthylèneglycol.

8. Colle fusible selon une des revendications 1 à 7, **caractérisée en ce que** le composant de polyester présente une teneur en acide dicarboxylique aliphatique linéaire, de préférence un acide dicarboxylique en C₂ jusqu'à C₁₄ et plus particulièrement une teneur en acide adipique.

9. Colle fusible selon une des revendications 1 à 8, **caractérisée en ce que** le composant de polyester comprend un copolyester qui est élaboré à partir d'acides dicarboxyliques aliphatiques et aromatiques et de diols d'une longueur de chaîne carbonée en C₂ jusqu'à C₂₀ et qui présente de préférence un nombre de groupes OH compris entre 10 et 50, et plus particulièrement entre 20 et 40 ainsi qu'une température de transition vitreuse comprise entre 0 et -50°C.

10. Colle fusible selon une des revendications 1 à 9, **caractérisée en ce que** le composant de polyester présente une teneur en acide dicarboxylique aromatique, de préférence une teneur en acide téréphtalique et/ou en acide phtalique ou isophtalique.

11. Colle fusible selon la revendication 10, **caractérisée en ce que** le composant de polyester contient à peu près la même fraction en poids d'un acide dicarboxylique aliphatique et d'un acide dicarboxylique aromatique.

12. Colle fusible selon la revendication 11, **caractérisée en ce que** la fraction en acide aromatique dicarboxylique du composant de polyester est constituée de deux parts à peu près égales en poids d'acide téréphtalique et d'acide phtalique.

13. Colle fusible selon une des revendications 1 à 12, **caractérisée en ce que** la Colle fusible contient en outre additionnellement un composé d'hydroxypolyester en particulier du type amorphe qui est constitué d'une manière connue en soi, d'acide isophtalique et au moins d'un diol ou d'un polyol aliphatique inférieur, en particulier l'éthylèneglycol, l'hexanediol et/ou le néopentylglycol.

14. Colle fusible selon une des revendications 1 à 13, **caractérisée en ce que** le composant contenant les groupes NCO est un composant du type polyisocyanate, de préférence un diisocyanate et en particulier et au moins en excès un diphénylméthane-4,4'-diisocyanate ou alors un diisocyanate aliphatique, en particulier l'isophorondiisocyanate, le tétraméthylxylyldiisocyanate, le diphénylméthane-4,4'-diisocyanate et/ou l'hexanediisocyanate hydraté.

15. Colle fusible selon une au moins des revendications précédentes contenant par rapport au poids total,
a) entre 50 et 70 % en poids du composant d'hydroxypolyester, qui représente environ 30 % en poids par rapport à l'ensemble du diol, d'un hydroxypolyéther segmentant/séquençant présentant une masse moléculaire d'environ 3.000,
b) un hydroxypolyester linéaire dépourvu d'hydroxypolyéther et
c) environ 10 % en poids de diisocyanate.

16. Colle fusible selon la revendication 15 contenant par rapport au poids total,
a) entre 60 et 65 % en poids d'un polyester contenant un polyéthylèneglycol,
b) entre 25 et 30 % en poids d'un polyester dépourvu de polyéthylèneglycol,
c) entre 5 et 15 % en poids de diphénylméthane-4,4'-diisocyanate, ainsi que
d) éventuellement des antioxydants ou d'autres additifs convenables.

17. Colle fusible selon l'une des revendications précédentes contenant additionnellement d'autres hydroxypolyester, des hydroxypolyétherester et/ou des hydroxypolyéther, comme par exemple une polycaprolactone, un polycarbonate, un polytétrahydrofurane.

18. Colle fusible selon l'une des revendications précédentes, **caractérisée en ce que** la Colle fusible est durcissable sans traitement rayonnant par réaction d'humidité (« ohne Strahlungsbehandlung durch Feuchtigkeitseinwirkung »).

19. Procédé pour la fabrication d'un matériel perméable à l'eau uniquement sous forme de vapeur sous la forme, en particulier d'un matériel fibreux de type textile/tramé (« bahnartigen ») muni à plat d'une feuille de polyuréthane, dans lequel le matériel fibreux est recouvert du matériel de type polyuréthane et/ou par la suite le matériel de type polyuréthane est durci afin de devenir une couche perméable à la vapeur d'eau, **caractérisé en ce que** la couche est formée au moyen d'une Colle fusible durcissable par l'action de l'humidité (« durch Feuchtigkeitseinwirkung härtenden Schmelzkleber ») conformément à une des revendications 1 à 18 et qui est apposée immédiatement ou au moyen d'un procédé de transfert sur le matériel fibreux.

20. Procédé selon la revendication 19, **caractérisé en ce que** la Colle fusible est durcie sans traitement rayonnant par réaction d'humidité.

21. Procédé selon les revendications 19 et 20, **caractérisé en ce que** le matériel de type polyuréthane est apposé sur le matériel fibreux par un procédé de transfert.

22. Matériel perméable à l'eau uniquement sous forme de vapeur sous la forme d'un matériel fibreux en particulier de type textile/tramé lié à plat (« flächig verbundenen ») avec une couche de polyuréthane, en particulier pour la fabrication de vêtements résistants aux intempéries et que l'on peut également obtenir grâce au procédé d'une des revendications 19 à 21.

23. Matériel selon la revendication 22, **caractérisé en ce que** la couche de polyuréthane est étanche jusqu'à une pression test d'au moins 0,7 bar (une épaisseur d'eau de 7 m) et ceci conformément à la norme DIN 53886.

24. Matériel selon la revendication 22 ou 23, **caractérisé en ce que** le matériel fibreux est tricoté ou tissé.

25. Matériel selon les revendications 22 à 24, **caractérisé en ce que** le matériel est construit en deux couches où l'une des couches est constituée de matériel fibreux et l'autre couche d'une feuille de polyuréthane.

26. Matériel selon une des revendications 22 à 25, **caractérisé en ce que** le matériel est construit avec trois ou plusieurs couches ou au moins une des couches de type feuille de polyuréthane est couverte sur ses deux faces de couches de matériel fibreux.

27. Feuille, que l'on peut obtenir à partir d'une Colle fusible conformément à l'une des revendications 1 à 18.
